# EUROPEAN PATENT SPECIFICATION

(11) **EP 2 050 588 B1**
(45) Date of publication and mention of the grant of the patent: **15.08.2012**
(21) Application number: 08166254.6
(22) Date of filing: 09.10.2008
(51) Int. Cl.: B60C 11/12

(54) **Tire with tread having full depth siping**
Reifen mit Lauffläche mit Lamellierung in voller Tiefe
Pneu avec une chape disposant d'un entaillage pleine profondeur

(30) Priority: 15.10.2007 US 872188
(43) Date of publication of application: 22.04.2009
(73) Proprietor: The Goodyear Tire & Rubber Company, Akron, OH 44316-0001 (US)
(72) Inventor: De Barsy, Olivier, L-8467, Eischen (LU)
(74) Representative: Kutsch, Bernd

(56) References cited:
- EP-A- 0 911 187
- JP-A- 2001 191 741
- US-A- 4 078 596
- US-A- 4 736 783
- US-B1- 6 196 288

## Description

### Field of the Invention

The present invention relates to tires generally and more specifically to tires having treads with narrow grooves called sipes.

### Background of the Invention

Tire treads are often molded in such a way to create a pattern of groove voids for the drainage of water and to provide tread edges to give the tire traction on the road surfaces. Grooves other than sipes are typically wide enough to remain open as the tire rolls through the portion of the tread contacting the roadway. The tread depth, also called the "non-skid depth" of a tread, is established as the distance between the outer surface of the tread and the deepest grooves as measured at the groove base or bottom. Often these deepest grooves are circumferentially continuous grooves, but can be inclined or lateral extending grooves depending on the tread pattern.

As the tread wears beyond a certain depth, many countries dictate the tires be replaced because the grooves creating water drainage paths decrease in size making them inefficient in removing the water. At a tread thickness of 2.0 mm or less above the non-skid depth the tires are often required by safety laws to be removed. Tread wear indicators (TWI's) are often molded into the base of the full depth grooves to provide a way of telling when a tire must be replaced.

Narrow incisions into a tire tread provide a type of groove that is so narrow that it closes in the footprint or road contact patch of a tire as the tire rotates. These narrow grooves are referred to as sipes. Sipes form additional edges in the rib or block shaped tread elements that add significantly to the tires traction performance in all road conditions. Sipes do not drain water in the same way as wider grooves do, but nonetheless the extra edges provide meaningful improvements in traction.

One significant drawback of the use of sipes is they are prone to cause cracking in the tread element if not carefully designed, particularly so when the sipes cut into a wall of a tread element open to a wider groove, i.e. at a location where stress is already increased due to the presence of other design elements. For that problem to be avoided, tire designers make the blades or sipes short, that is the blades used to form the sipes extend radially inwardly only a distance well above the tread wear indicators such as typically 4 mm or more above the base of the full depth grooves or the non-skid depth. As can be easily appreciated, this means as the tread is worn down, the sipes disappear long before the tire must be replaced. This further means that as the tire tread decreases in its ability to drain water from its worn shallow groove voids, it also completely loses the benefit of the traction edges created by the sipes.

The present invention provides a solution that not only enables sipe edges to remain until the tire is fully worn, but has done so in a way that avoids cracks being developed in the tread edges.

EP-A1- 0 911 187 describes a tire tread according to the preamble of claim 1.

US-B1- 6,196,288 describes a tire tread with sipes extending from an outer tread surface radially inwardly beyond the fully worn tire tread wear depth level.

### Summary of the Invention

The invention relates to a tire tread according to claim 1 and to a tire according to claim 8.

Depending claims refer to preferred embodiments of the invention.

In one aspect of the invention, the tread for a tire has a plurality of tread elements wherein the shape of these tread elements is defined by a plurality of open grooves. The tread has at least one full depth groove. The full depth groove has a radially innermost groove bottom providing a measuring location to establish the distance between the groove bottom and outer surface of the tread defining the tread depth. At least one tread element adjacent the at least one full depth groove has one or more sipes extending radially inwardly from a radially outermost surface of the tread element inwardly to a depth greater than a distance x. The distance x defines a fully worn tread depth level extending radially above the full depth groove bottom. The location x is defined by a tread wear indicator (TWI) molded

into the tread indicating the location of the distance x relative to the groove bottom which defines the fully worn tread depth.

The at least one sipe extends across at least a portion of the at least one tread element's radially outermost surface

through a sidewall of the tread element connecting the at least one sipe to the at least one full depth groove. The sidewall has a curved radially inner portion extending to the groove bottom of the at least one full depth groove and the sipe extends through the curved portion to the groove bottom having a maximum depth greater than the full depth groove bottom. The full depth groove bottom corresponds to the non-skid depth of the tire.

The tread has a plurality of full depth grooves and a plurality of tread elements. Each tread element has one or more sipes wherein at least one of these sipes within each tread element extends at least a distance z to beyond the tread wear indicator level x and even extends to the full depth of the tread and intersects a full depth groove at the groove bottom.

In one aspect of the invention the one or more sipes extending from an outer surface of the tread element radially inwardly beyond the fully worn tire tread wear depth level (x) extend 0.5 to 3.0 mm, alternatively 1.0 to 2.0 mm, radially inwardly beyond the fully worn tire tread wear depth level (x).

In a further aspect of the invention, the one or more sipes extending from an outer surface of the tread element (6) radially inwardly beyond the fully worn tire tread wear depth level (x) extend 1.5 to 3.5 mm, alternatively 2.0 to 3.0 mm, radially inwardly beyond the fully worn tire tread wear depth level (x) and extend radially inwardly beyond the radially innermost groove bottom.

In yet a further aspect of the invention, the one or more sipes extending from an outer surface of the tread element radially inwardly beyond the fully worn tire tread wear depth level (x) extend 0.3 to 1.5 mm, alternatively 0.5 to 1.0 mm, radially inwardly beyond the radially innermost groove bottom.

### Definitions

The following definitions are applicable to the present invention.

"Groove" means an elongated void area in a tread that may extend circumferentially or laterally about the tread in a straight curved, or zigzag manner. Circumferentially and laterally extending grooves sometimes have common portions and are sub classified as "wide groove", "narrow groove", or "sipe".

Grooves may be of varying depths in a tire tread. The depth of a groove may vary around the circumference of the tread, or the depth of one groove may be constant but vary from the depth of another groove in the tire tread. If a narrow or wide groove is of substantially reduced depth as compared to wide circumferential grooves which they interconnect, they are regarded as forming "tie bars" tending to maintain a rib-like character in the tread region involved.

A "sipe" (or alternately also called "incision") means a groove having a width in the range from 0.1 % to 0.8% of the tread width. In the embodiments of this invention, the term "sipe" means a groove having a width in the range from 0.2% to 0.6% of the tread width or, in absolute units, a groove having a width in a range from 0.4 mm to 1.5 mm and more preferably from 0.5 mm to 1.2 mm. A sipe typically is formed by steel blades inserted into a cast or machined mold or tread ring therefore.

A "narrow groove" means a groove other than a sipe having a width in the range from more than 0.8% up to 3% of the tread width. In the embodiments of the invention, narrow grooves have a width from 1.6 mm to 4 mm.

A "wide groove" means a groove other than a sipe or narrow groove having a width greater than 3% of the of the tread width. In the embodiments of the invention, wide grooves are grooves having a width of 5 mm or more.

The "groove width" is equal to the tread surface area occupied by a groove, the width of which is in question, at a given tread depth divided by the length of such groove. Hence, the groove width is its average width over its length.

The "non-skid depth" is the radial distance between the outer surface of the tire tread and the deepest grooves not being sipes as measured at the groove base or bottom.

"Inner" means toward the inside of the tire and "outer" means toward its exterior.

"Radial" and "radially" are used to mean directions radially toward or away from the axis of rotation of a tire.

"Tread" means a molded rubber component which, when bonded to a tire casing, includes that portion of the tire that comes into contact with the road when the tire is normally inflated and under normal load. The tread has a non-skid depth.

### Brief Description of the Drawings

The invention will be described by way of example and with reference to the accompanying drawings in which:
FIG. 1 illustrates a perspective view of an exemplary tread made according to the present invention.
FIG. 2 is a plan view of the exemplary tread of Figure 1.
FIG. 3 is an enlarged portion taken from the plan view of Figure 2 showing a portion of the tread.
FIG. 4 is a cross section of the tire with the tread portion made according to the present invention.
FIG. 5 is a cross sectional view of a prior art tread element showing the depth of a sipe or incision according to the prior art.
FIG. 6 is a view taken along line 6-6 of the prior art cross section of Figure 5. It illustrates the depth of the prior art blade relative to the base or groove bottom of the tread with the sipes ending significantly above the tread wear indicator (TWI).
FIG. 7 is a cross sectional view of the sipe or incision of the present invention.
FIG. 8 is an end view taken along the lines 8-8 from Figure 7 showing the depth of the sipe.

### Detailed Description of the Invention

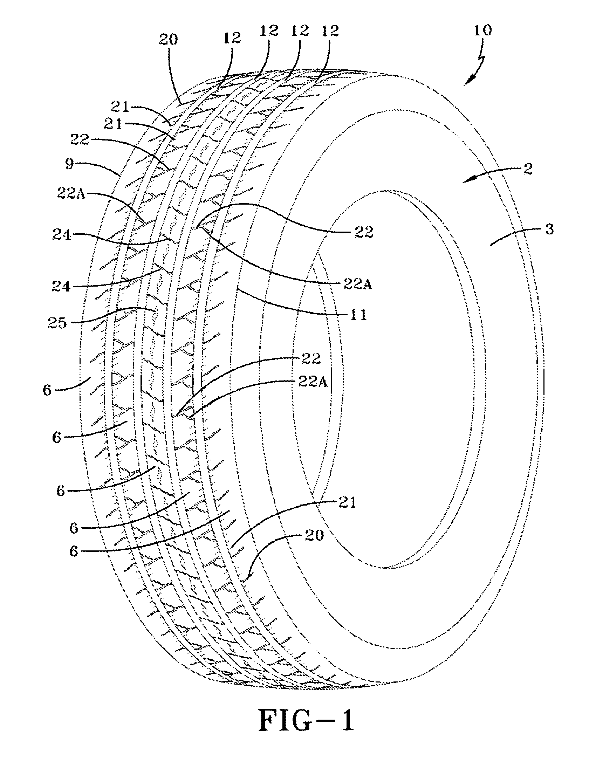

With reference to Figure 1 a tire 2 made according to the present invention is shown. The tire 2 has a radially outer tread 10 which generally extends around the outermost surface of the tire carcass 3. As shown, the tread 10 has a plurality of wide full depth circumferentially extending grooves 12 that define tread elements as shown in the shape of ribs 6. These ribs 6 extend circumferentially around the tire 2 as shown. The ribs 6 on the outer lateral edges 9, 11 of the tread 10 extend inwardly and include a plurality of superficial grooves 20 or sipes extending from a portion of the rib 6 to a wide circumferential groove 12. Between each of these superficial grooves 20 or sipes are a plurality of small incisions or small sipes 21 used to help reduce rib edge wear. Axially inward of the outermost of the laterally outer ribs 6 is an intermediate rib 6 on each side of the center plane (CP) of the tire 2. The intermediate rib 6 as illustrated shows a plurality of incisions or sipes 22 that extend completely across the tread rib 6 from one full depth groove 12 to another full depth groove 12 on the opposite side of the rib 6. These sipes 22 are is in the shape of an "S". These sipes 22 are coupled with a respective superficial groove that has a branched section 22A that intersects the sipes 22 as it extends across the tread element at a mid point and extends outward to intersect one groove 12. Additionally, there are small sipes 21 as illustrated that open into the circumferential groove 12 as well. At the center plane (CP) of the tread 10 there is a circumferentially continuous tread rib 6. This tread rib 6 also has sipes 24 or incisions that extend laterally across the tread rib 6. Additionally, circumferentially extending blind grooves 25 are included in the rib 6 between each sipe 24 respectively as illustrated.

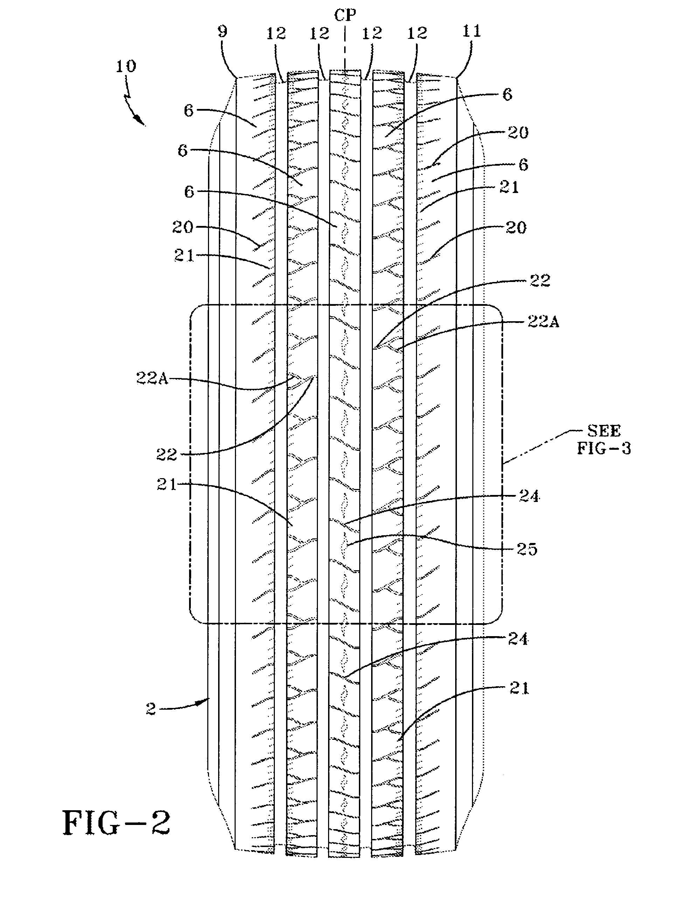

Figure 2 illustrates a plan view of the tread 10 as described above.

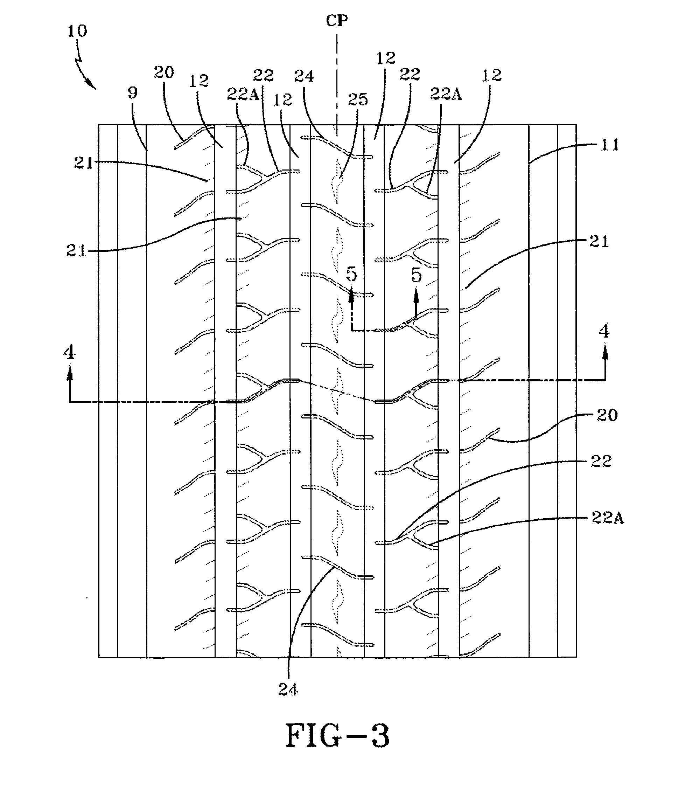

With reference to Figure 3 an enlarged portion of that tread 10 shown in Figures 1 and 2 is illustrated.

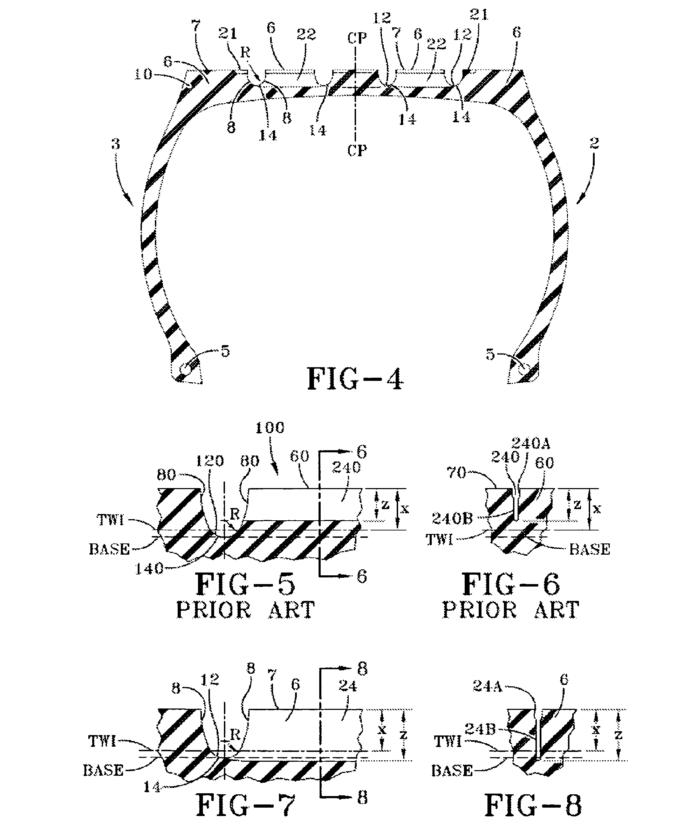

A cross sectional view taken across lines 4-4 is shown in Figure 4. The cross sectional view shows the entire tire 2 having beads 5 at the radially innermost portion of the tire 2 and the radially outermost portion or crown of the tire carcass 3 showing the tread 10. As shown in the cross section the circumferentially extending grooves 12 extend from a full depth to a groove bottom 14 as illustrated. As shown each groove 12 has a radius of curvature R extending radially outward from the groove bottom 14 to the groove wall 8 which extends to a radially outermost surface 7 of the ribs 6. As shown in the cross section of Figure 4 the laterally outermost tread ribs 6 do not show the full depth of the narrow grooves or sipes 20 as illustrated, however, at the intermediate ribs 6 full depth sipes 24 can be seen extending across the entire rib 6 as illustrated. The sipes 24 extend radially inwardly cutting through the sides or groove walls 8 to the base or bottom 14 of the tread grooves 12.

With reference to Figure 5 an exemplary portion of a tread 100 is shown according to the prior art. In this tread 100 the full depth groove 120 extends to the groove bottom 140 as illustrated by the dashed line. This groove bottom 140 extends radially outward in a curved fashion as shown and forms the sides or groove walls 80 of the adjacent tread rib 60, i.e. in this case the laterally outer rib 60 and an intermediate rib 60. As shown, the sipe 240 according to the prior art extend to a depth z above the location x where a TWI level shown by a dashed line shows the worn level of the tread 100. These TWI's (not shown) typically are positioned in the base of the grooves 120 and extend radially outwardly a distance between 1.6 and 2.0 mm from the non-skid depth depending on the local legal requirements. These TWI's provide the user with an easy indication of when the tread is worn and the tire should be replaced and removed from the vehicle. As shown, the sipes 240 extend from the radially outermost surface 70 of the tread 100 inwardly to the distance z directly above the TWI level x. The edges of the sipe 240 open into the side or groove wall 80 of the full depth groove, but not at full depth, but well above the TWI level x to avoid the radius of curvature R at the bottom of the groove 140.

The cross sectional view of Figure 6 shows how this type of sipe 240 would appear in terms of its depth relative to the tread's outer surface 70. As shown, the sipe 240 has a wider upward portion 240A and a significantly narrow portion 240B as it extends radially inwardly to a shortened depth ending at Z.

With reference to Figure 7, a cross sectional view is shown only with the sipe 24 made according to the present invention it being understood that the sipes 20, 22, and 22A also are or can be made to the extended depths identical to sipe 24 as shown. The sipe 24 extends below the depth of the full depth groove bottom 14 and as such opens from a side or groove wall 8 of the rib 6 into the full depth groove 12 and even opens through the radius of curvature R along the wall 8 of the groove 12 into the base or bottom 14 of the groove 12, i.e. up to or even beyond the non-skid depth of the tread. This feature enables one to look into the groove 12 from a top view and to see open portions of the sipes 20, 22, 22A and 24 extending directly into the base or bottoms 14 of the grooves 12 open along the entire side or groove wall 8 and extending across the outer surface 7 of the rib 6 as illustrated in Figure 3. In the illustrated embodiment, the incision or sipe 24 actually cuts into the tread rib 6 a distance z shown below the level of the base of the groove 12.

Figure 8 illustrates this in cross sectional view wherein the radially outermost portion 24A of sipe 24 is slightly enlarged and wherein a much longer extension 24B of the sipe 24 occurs into the tread element extending to the distance z at least to a depth below the tread wear indicator level TWI. As shown, z is below the tread base line.

When the tread wears and the ribs 6 are being reduced in height, the total volume of drainage available for the circumferential grooves 12 is dramatically reduced. The radially outer surface 7 of the tread ribs 6 will continue to decrease until it reaches the tread wear indicator (TWI) level x. At this location, when the tread 10 is fully worn in accordance with the respective legal requirement, the sipes 20, 22, 22A or 24 form incisions that are still exposed during this worn condition of the tire 2. This is significant in so far as normally these sipes 24 are fully erased when the tread is worn down to the TWI so that tread elements 6 become solid ribs 6 when the tire's worn condition is reached. In the present invention however the blades forming the sipes 24 when the tire is molded and accordingly also the sipes 24 in the finished tire tread extend beyond the TWI level x to a distance z much deeper. As a result, when the tread 10 reaches the fully worn condition, these sipes 24 will still provide biting edges in the tread rib 6. This has tremendous advantage in that the biting edges of the incisions or sipes 21, 22, 22A or 24 add additional traction. This additional traction is maintained throughout the life of the tire 2 and does not diminish as the tread wears to its full worn depth.

With reference to Figure 5, it can be seen that a prior art tread 100 has sipes 240 that generally stop well above the TWI level x to avoid the area where the curvature R of the groove 120 exists. This area is a typical high risk area for cracks. The most critical location for stress fractures (a site prone for stress/fatigue marks) is usually located approximately where the TWI dashed line x is indicated along the rising slope of the center of the groove bottom radius R at an angular location 45 degrees from the groove bottom 140. The solution arrived at avoiding this location of crack formation was to make the sipe deeper and not shallower in order that the sipe ends below the rising slope at the center of the groove bottom 140.

Referring back to Figure 1, the tire 2 as shown is preferably a long haul steer tire and is designed for commercial trucks and heavy vehicles. Typically, the tread 10 has a non-skid depth of typically 13 to 20 mm. This non-skid or tread depth can now be made 20 percent lower with the use of the sipes 20, 22, 22A or 24 according to the present invention and one could optionally also change the tread compound from a high wear resistant one to a cool running compound accepting higher mileage removal but achieving a cooler running tire.

By using a lower non-skid depth where the tread's overall life may be slightly reduced, the rolling resistance is dramatically improved such that the fuel efficiency of the vehicle can achieve much greater performance and as such the overall cost of operating the vehicle can be reduced even though the tires may need to be replaced more rapidly. Alternatively, the tread 10 can still be made at its full depth of 13 to 20 mm and the advantage of improved traction through the full life of the tire 2 can be achieved by using the extended depth sipes 20, 22, 22A and 24.

Currently, there is a move to achieve greater fuel efficiency for vehicles. The concept of providing an initially lower non-skid depth but also of providing deeper blades or sipes that match the depth of the full depth grooves or even go beyond that depth enables a vehicle to operate with greater fuel efficiency without sacrificing traction during the life of the tire.

Commercial trucks typically have a tread base above the belt reinforcing structure that permits the use of such deep sipes as proposed in the present invention.

But even in light truck and passenger tires, providing longer depth incisions or sipes according to this invention implies that ice, snow and wet traction is superior from what is currently achieved because the biting edges of the sipes remain through the full life of the tire.

It is generally recognized that wet traction performance is greatest when the tire is new. This traction diminishes significantly and progressively as the tire wears down to the fully worn condition. The present invention tries to minimize this drop off by providing incisions or sipes that are available for the entire tread life of the tire.

While the representative example shown in the Figures utilize a tread pattern having tread elements in the shape of ribs 6, it is understood that the present invention can be applied in any tread pattern including those using block shaped tread elements or other shaped tread elements wherein not only long continuously extending circumferential grooves are employed but also lateral grooves in combination with the deep sipes according to the present invention.

## Claims

1. A tire tread comprising a tread element (6) and a groove (12) and one or more sipes (21, 24), the groove (12) being wider than a sipe (21, 24) and comprising a radially innermost groove bottom (14), wherein a fully worn tire tread wear depth level (x) corresponding to the depth of a groove at the surface of a tread wear indicator is radially above the radially innermost groove bottom (14), wherein the tread element (6) comprises one or more sipes (24) extending from an radially outermost surface (7) of the tread element (6) radially inwardly beyond the fully worn tire tread wear depth level (x), wherein the one or more sipes (24) extend across at least a portion of the radially outermost surface (7) and through at least one sidewall of the tread element (6) comprising the one or more sipes (24), said at least one sidewall having a curved radially inner portion extending to the groove bottom of the groove (12) comprising the radially innermost groove bottom (14), and wherein the one or more sipes (24) extend through the curved portion to the radially innermost groove bottom (14), **characterized in that** the one or more sipes (24) have a maximum depth (z) greater than the depth of the radially innermost groove bottom (14).

2. The tire tread of claim 1 comprising a plurality of tread elements (6) and a plurality of grooves (12) wherein the shape of each tread element (6) is defined by a plurality of open grooves and wherein the tread element comprising the one or more sipes (24) is adjacent the groove (12) comprising the radially innermost groove bottom (14).

3. The tire tread of at least one of the previous claims wherein the one or more sipes (24) extending from an outer surface (7) of the tread element (6) radially inwardly beyond the fully worn tire tread wear depth level (x) extend 0.5 to 3.0 mm radially inwardly beyond the fully worn tire tread wear depth level (x).

4. The tire tread of at least one of the previous claims wherein the one or more sipes (24) extending from an outer surface (7) of the tread element (6) radially inwardly beyond the fully worn tire tread wear depth level (x) extend 1.5 to 3.5 mm radially inwardly beyond the fully worn tire tread wear depth level (x) and extend radially inwardly beyond the radially innermost groove bottom (14).

5. The tire tread of claim 4 wherein the one or more sipes (24) extending from an outer surface (7) of the tread element (6) radially inwardly beyond the fully worn tire tread wear depth level (x) extend 2.0 to 3.0 mm radially inwardly beyond the fully worn tire tread wear depth level (x) and extend radially inwardly beyond the radially innermost groove bottom (14).

6. The tire tread of at least one of the previous claims wherein the one or more sipes (24) extending from an outer surface (7) of the tread element (6) radially inwardly beyond the fully worn tire tread wear depth level (x) extend 0.3 to 1.5 mm radially inwardly beyond the radially innermost groove bottom (14).

7. The tire tread of claim 11 wherein the one or more sipes (24) extending from an outer surface (7) of the tread element (6) radially inwardly beyond the fully worn tire tread wear depth level (x) extend 0.5 to 1.0 mm radially inwardly beyond the radially innermost groove bottom (14).

8. A tire comprising a tire tread according to one of the previous claims.

9. The tire of claim 8 wherein the tire is a steer truck tire.

## Patentansprüche

1. Reifenlauffläche, umfassend ein Profilelement (6) und eine Rille (12) und ein oder mehrere Feineinschnitte (21, 24), wobei die Rille (12) breiter als ein Feineinschnitt (21, 24) ist und einen radial innersten Rillengrund (14) umfasst, wobei ein Abnutzungs-Tiefenniveau (x) bei vollständig abgenutzter Reifenlauffläche, das der Tiefe einer Rille an der Oberfläche eines Laufflächenabnutzungsindikators entspricht, sich radial über dem radial innersten Rillengrund (14) befindet, wobei das Profilelement (6) einen oder mehrere Feineinschnitte (24) umfasst, die sich von einer radial äußersten Oberfläche (7) des Profilelements (6) radial einwärts über das Abnutzungs-Tiefenniveau (x) bei vollständig abgenutzter Reifenlauffläche hinaus erstrecken, wobei der eine oder die mehreren Feineinschnitte (24) sich über mindestens einen Teil der radial äußersten Oberfläche (7) und durch mindestens eine Seitenwand des Profilelements (6), das den einen oder die mehreren Feineinschnitte (24) umfasst, erstrecken, wobei besagte mindestens eine Seitenwand einen gekrümmten radial inneren Teil aufweist, der sich zu dem Rillengrund der Rille (12), die den radial innersten Rillengrund (14) umfasst, erstreckt, und wobei der eine oder die mehreren Feineinschnitte (24) sich durch den gekrümmten Teil zu dem radial innersten Rillengrund (14) erstrecken, **dadurch gekennzeichnet, dass** der eine oder die mehreren Feineinschnitte (24) eine maximale Tiefe (z) aufweisen, die größer als die Tiefe des radial innersten Rillengrunds (14) ist.

2. Reifenlauffläche nach Anspruch 1, welche eine Vielzahl von Profilelementen (6) und eine Vielzahl von Rillen (12) umfasst, wobei die Form jedes Profilelements (6) durch eine Vielzahl offener Rillen definiert ist, und wobei das Profilelement, das den einen oder die mehreren Feineinschnitte (24) umfasst, sich benachbart zu der Rille (12) befindet, die den radial innersten Rillengrund (14) umfasst.

3. Reifenlauffläche nach mindestens einem der vorgenannten Ansprüche, wobei der eine oder die mehreren Feineinschnitte (24), die sich von einer äußeren Oberfläche (7) des Profilelements (6) radial einwärts über das Abnutzungs-Tiefenniveau (x) bei vollständig abgenutzter Reifenlauffläche hinaus erstrecken, sich 0,5 bis 3,0 mm radial einwärts über das Abnutzungs-Tiefenniveau (x) bei vollständig abgenutzter Reifenlauffläche hinaus erstrecken.

4. Reifenlauffläche nach mindestens einem der vorgenannten Ansprüche, wobei der eine oder die mehreren Feineinschnitte (24), die sich von einer äußeren Oberfläche (7) des Profilelements (6) radial einwärts über das Abnutzungs-Tiefenniveau (x) bei vollständig abgenutzter Reifenlauffläche hinaus erstrecken, sich 1,5 bis 3,5 mm radial einwärts über das Abnutzungs-Tiefenniveau (x) bei vollständig abgenutzter Reifenlauffläche hinaus erstrecken und sich radial einwärts über den radial innersten Rillengrund (14) hinaus erstrecken.

5. Reifenlauffläche nach Anspruch 4, wobei der eine oder die mehreren Feineinschnitte (24), die sich von einer äußeren Oberfläche (7) des Profilelements (6) radial einwärts über das Abnutzungs-Tiefenniveau (x) bei vollständig abgenutzter Reifenlauffläche hinaus erstrecken, sich 2,0 bis 3,0 mm radial einwärts über das Abnutzungs-Tiefenniveau (x) bei vollständig abgenutzter Reifenlauffläche hinaus erstrecken und sich radial einwärts über den radial innersten Rillengrund (14) hinaus erstrecken.

6. Reifenlauffläche nach mindestens einem der vorgenannten Ansprüche, wobei der eine oder die mehreren Feineinschnitte (24), die sich von einer äußeren Oberfläche (7) des Profilelements (6) radial einwärts über das Abnutzungs-Tiefenniveau (x) bei vollständig abgenutzter Reifenlauffläche hinaus erstrecken, sich 0,3 bis 1,5 mm radial einwärts über den radial innersten Rillengrund (14) hinaus erstrecken.

7. Reifenlauffläche nach Anspruch 11, wobei der eine oder die mehreren Feineinschnitte (24), die sich von einer äußeren Oberfläche (7) des Profilelements (6) radial einwärts über das Abnutzungs-Tiefenniveau (x) bei vollständig abgenutzter Reifenlauffläche hinaus erstrecken, sich 0,5 bis 1,0 mm radial einwärts über den radial innersten Rillengrund (14) hinaus erstrecken.

8. Reifen, umfassend eine Reifenlauffläche nach einem der vorgenannten Ansprüche.

9. Reifen nach Anspruch 8, wobei der Reifen ein Lastkraftwagen-Lenkreifen ist.

## Revendications

1. Bande de roulement de bandage pneumatique comprenant un élément de bande de roulement (6) et une rainure (12) et une ou plusieurs lamelles (21, 24), la rainure (12) étant plus large qu'une lamelle (21, 24) et comprenant une base de rainure (14) située le plus à l'intérieur en direction radiale, dans laquelle le niveau de profondeur d'usure de bande de roulement (x) d'un bandage pneumatique complètement usé, correspondant à la profondeur de la rainure à la surface d'un indicateur d'usure de bande de roulement, est disposé au-dessus en direction radiale de la base de rainure (14) située le plus à l'intérieur en direction radiale, dans laquelle l'élément de bande de roulement (6) comprend une ou plusieurs lamelles (24) s'étendant à partir d'une surface (7) située le plus à l'extérieur en direction radiale de l'élément de bande de roulement (6) vers l'intérieur en direction radiale au-delà du niveau de profondeur d'usure de bande de roulement (x) d'un bandage pneumatique complètement usé, dans laquelle lesdites une ou plusieurs lamelles (24) s'étendent à travers au moins une portion de la surface (7) située le plus à l'extérieur en direction radiale et à travers au moins un flanc de l'élément de bande de roulement (6) comprenant plusieurs lamelles (24), ledit au moins un flanc possédant une portion interne courbe en direction radiale s'étendant jusqu'à la base de la rainure (12) comprenant la base de rainure (14) située le plus à l'intérieur en direction radiale, et dans laquelle lesdites une ou plusieurs lamelles (24) s'étendant à travers la portion courbe jusqu'à la base de rainure (14) située le plus à l'intérieur en direction radiale, **caractérisée en ce que** lesdites une ou plusieurs lamelles (24) possèdent une profondeur maximale (z) supérieure à la profondeur de la base de rainure (14) située le plus à l'intérieur en direction radiale.

2. Bande de roulement de bandage pneumatique selon la revendication 1, comprenant plusieurs éléments de bande de roulement (6) et plusieurs rainures (12), dans laquelle la configuration de chaque élément de bande de roulement (6) est définie par plusieurs rainures ouvertes, et dans laquelle l'élément de bande de roulement comprenant lesdites une ou plusieurs lamelles (24) est situé en position adjacente à la rainure (12) comprenant la base de rainure (14) située le plus à l'intérieur en direction radiale.

3. Bande de roulement de bandage pneumatique selon au moins une des revendications précédentes, dans laquelle lesdites une ou plusieurs lamelles (24) s'étendant à partir d'une surface externe (7) de l'élément de bande de roulement (6) en direction radiale vers l'intérieur au-delà du niveau de profondeur d'usure de bande de roulement (x) d'un bandage pneumatique complètement usé s'étendent sur une distance de 0,5 à 3,0 mm en direction radiale vers l'intérieur au-delà du niveau de profondeur d'usure de bande de roulement (x) d'un bandage pneumatique complètement usé.

4. Bande de roulement de bandage pneumatique selon au moins une des revendications précédentes, dans laquelle lesdites une ou plusieurs lamelles (24) s'étendant à partir d'une surface externe (7) de l'élément de bande de roulement (6) en direction radiale vers l'intérieur au-delà du niveau de profondeur d'usure de bande de roulement (x) d'un bandage pneumatique complètement usé s'étendent sur une distance de 1,5 à 3,5 mm en direction radiale vers l'intérieur au-delà du niveau de profondeur d'usure de bande de roulement (x) d'un bandage pneumatique complètement usé et s'étendent en direction radiale vers l'intérieur au-delà de la base de rainure (14) située le plus à l'intérieur en direction radiale.

5. Bande de roulement de bandage pneumatique la revendication 4, dans laquelle lesdites une ou plusieurs lamelles (24) s'étendant à partir d'une surface externe (7) de l'élément de bande de roulement (6) en direction radiale vers l'intérieur au-delà du niveau de profondeur d'usure de bande de roulement (x) d'un bandage pneumatique complètement usé s'étendent sur une distance de 2,0 à 3,0 mm en direction radiale vers l'intérieur au-delà du niveau de profondeur d'usure de bande de roulement (x) d'un bandage pneumatique complètement usé et s'étendent en direction radiale vers l'intérieur au-delà de la base de rainure (14) située le plus à l'intérieur en direction radiale.

6. Bande de roulement de bandage pneumatique selon au moins une des revendications précédentes, dans laquelle lesdites une ou plusieurs lamelles (24) s'étendant à partir d'une surface externe (7) de l'élément de bande de roulement (6) en direction radiale vers l'intérieur au-delà du niveau de profondeur d'usure de bande de roulement (x) d'un bandage pneumatique complètement usé s'étendent sur une distance de 0,3 à 1,5 mm en direction radiale vers l'intérieur au-delà de la base de rainure (14) située le plus à l'intérieur en direction radiale.

7. Bande de roulement de bandage pneumatique la revendication 6, dans laquelle lesdites une ou plusieurs lamelles (24) s'étendant à partir d'une surface externe (7) de l'élément de bande de roulement (6) en direction radiale vers l'intérieur au-delà du niveau de profondeur d'usure de bande de roulement (x) d'un bandage pneumatique complètement usé s'étendent sur une distance de 0,5 à 1,0 mm en direction radiale vers l'intérieur au-delà de la base de rainure (14) située le plus à l'intérieur en direction radiale.

8. Bandage pneumatique comprenant une bande de roulement d'un bandage pneumatique selon une des revendications précédentes.

9. Bandage pneumatique selon la revendication 8, dans lequel le bandage pneumatique est un bandage pneumatique pour une roue directrice de camion.
